# EUROPEAN PATENT APPLICATION

(11) **EP 2 728 811 A2**
(43) Date of publication of application: **07.05.2014**
(21) Application number: 11789273.7
(22) Date of filing: 28.06.2011
(51) Int. Cl.: H04L 12/66

(54) **USER EQUIPMENT CONTROL METHOD AND DEVICE**

(71) Applicant: Huawei Device Co., Ltd., Shenzhen, Guangdong 518129 (CN)
(72) Inventor: ZHAO, Junjie, Shenzhen Guangdong 518129 (CN); SHAN, Zhenwei, Shenzhen Guangdong 518129 (CN); WU, Huangwei, Shenzhen Guangdong 518129 (CN); SUN, Jianhua, Shenzhen Guangdong 518129 (CN); YANG, Bo, Shenzhen Guangdong 518129 (CN)
(74) Representative: Lord, Michael
(86) International application number: PCT/CN2011/076481
(87) International publication number: WO 2011/150894

(57) **Abstract**

The present invention discloses a method and an apparatus for controlling a user equipment. The method includes: obtaining a first static picture of the user equipment; obtaining, according to the first static picture, feature information of the first static picture; obtaining an equipment identity of the user equipment according to the feature information; and controlling the user equipment according to the equipment identity. The apparatus includes a first obtaining module, a second obtaining module, a third obtaining module and a control module. According to the method and apparatus in embodiments of the present invention, a static picture of the user equipment is obtained, and the equipment identity of the user equipment is obtained according to the static picture, so that the user equipment can be controlled according to the equipment identity, and a user can quickly, accurately and intuitively determine the user equipment to be controlled, thereby improving user experience.

## Description

### FIELD OF THE INVENTION

The present invention relates to the field of communications, and in particular, to a method and an apparatus for controlling a user equipment in the field of communications.

### BACKGROUND OF THE INVENTION

With the popularization of application of digital technologies, various types of digital products have been widely used in every aspect of life, and a large number of digital media files, such as digital photos, music, video and so on, are produced. To realize sharing of media files between devices, most devices provides wireless or wired interfaces for realizing interconnection and interworking between the devices. For example, file sharing between devices may be realized by bluetooth, and file sharing between a terminal and a personal computer (Personal Computer, referred to as "PC") may be realized by a universal serial bus (Universal Serial Bus, referred to as "USB") interface. However, these sharing technologies can only realize file sharing between a limited number of devices, and cannot satisfy file sharing between a larger number of devices in future home. Moreover, a transmission speed of a sharing technology such as Bluetooth is low, and user experience is poor.

In response to requirements of digital home, the digital living network alliance (Digital Living Network Alliance, referred to as "DLNA"), based on the existing technologies and standards, defines and issues specifications for inter-operations between devices, so that media files can be seamlessly shared between devices of different manufacturers in the home, and therefore the requirements for future digital home may be satisfied.

The DLNA classifies home network devices (Home Network Devices, referred to as "HNDs") into three types of devices, that is, a digital media server (Digital Media Server, referred to as "DMS"), a digital media render (Digital Media Render, referred to as "DMR") and a digital media controller (Digital Media Controller, referred to as "DMC"). The DMC firstly searches the DMS for a file, then selects a DMR, and finally controls the DMR and the DMS to establish a connection between each other, which realizes the sharing of the media file.

The discovery and control of a device among the home network devices are based on a universal plug and play (Universal Plug and Play, referred to as "UPnP") device framework protocol. The DMC serves as a UPnP control point, and the DMP and the DMS serve as UPnP devices. A UPnP device sends a device on-line announcement message to the UPnP control point after the UPnP device goes online. After obtaining the device on-line announcement message, the UPnP control point further obtains device description and service description of the UPnP device, so that the UPnP control point may invoke an action command or a variable query command to control the UPnP device. Additionally, the DMC may obtain device description and service description of multiple DMRs and multiple DMSs simultaneously, and may control, through a UPnP action command, the DMRs and the DMSs to establish connections between each other, which realizes the sharing of the media files.

However, for a user who selects a DMR from a DMR list saved by the DMC, multiple DMRs of different types or multiple DMRs of a same type may exist in the home, for example, there may be multiple digital televisions in the home, and the user matches a specific DMR device with a DMR name displayed in the DMC, but the user may not know a corresponding name of each actual device displayed in the DMC. Therefore, the user may try many times before selecting a required DMR, so the user experience is not good enough.

### SUMMARY OF THE INVENTION

Therefore, embodiments of the present invention provide a method and an apparatus for controlling a user equipment, which can improve user experience.

In one aspect, an embodiment of the present invention provides a method for controlling a user equipment, where the method includes: obtaining a first static picture of the user equipment; obtaining, according to the first static picture, feature information of the first static picture; obtaining an equipment identity of the user equipment according to the feature information; and controlling the user equipment according to the equipment identity.

In another aspect, an embodiment of the present invention provides a method for controlling a user equipment, where the method includes: obtaining feature information of a static picture of the user equipment; forming a feature information database according to the feature information, where the feature information database includes feature information of each user equipment in at least one user equipment and a corresponding equipment identity; and sending the feature information database to a control device, so that the control device obtains an equipment identity corresponding to matching feature information in the feature information database, and controls the user equipment according to the equipment identity.

In still another aspect, an embodiment of the present invention provides an apparatus for controlling a user equipment, where the apparatus includes: a first obtaining module, configured to obtain a first static picture of the user equipment; a second obtaining module, configured to obtain, according to the first static picture, feature information of the first static picture; a third obtaining module, configured to obtain an equipment identity of the user equipment according to the feature information; and a control module, configured to control the user equipment according to the equipment identity.

In still another aspect, an embodiment of the present invention provides an apparatus for controlling a user equipment, where the apparatus includes: an obtaining module, configured to obtain feature information of a static picture of the user equipment; a forming module, configured to form a feature information database according to the feature information, where the feature information database includes feature information of each user equipment in at least one user equipment and a corresponding equipment identity; and a sending module, configured to send the feature information database to a control device, so that the control device obtains an equipment identity corresponding to matching feature information in the feature information database, and controls the user equipment according to the equipment identity.

Base on the foregoing technical solutions, according to the method and apparatus in the embodiments of the present invention, the static picture of the user equipment is obtained, and the equipment identity of the user equipment is obtained according to the static picture, so that the user equipment can be controlled according to the equipment identity, and a user can quickly, accurately and intuitively select, by using an image recognition technology, the user equipment to be controlled without making multiple attempts to select the user equipment, thereby improving the user experience.

### BRIEF DESCRIPTION OF THE DRAWINGS

To illustrate the technical solutions in the embodiments of the present invention more clearly, the following briefly describes accompanying drawings required for describing the embodiments of the present invention. Obviously, the accompanying drawings in the following description are merely some embodiments of the present invention, and persons of ordinary skill in the art may obtain other drawings from these accompanying drawings without making creative efforts.
FIG. 1 is a schematic flowchart of a method for controlling a user equipment according to an embodiment of the present invention;
FIG. 2 is a schematic flowchart of a specific embodiment of a method for controlling a user equipment according to an embodiment of the present invention;
FIG. 3 is a schematic flowchart of another specific embodiment of a method for controlling a user equipment according to an embodiment of the present invention;
FIG. 4 is a schematic flowchart of a method for controlling a user equipment according to another embodiment of the present invention;
FIG. 5 is a schematic flowchart of still another specific embodiment of a method for controlling a user equipment according to an embodiment of the present invention;
FIG. 6 is a schematic block diagram of an apparatus for controlling a user equipment according to an embodiment of the present invention;
FIG. 7A to FIG. 7F are schematic block diagrams of specific embodiments of an apparatus for controlling a user equipment according to an embodiment of the present invention;
FIG. 8 is a schematic block diagram of an apparatus for controlling a user equipment according to another embodiment of the present invention; and
FIGs. 9A and 9B are schematic block diagrams of specific embodiments of an apparatus for controlling a user equipment according to another embodiment of the present invention.

### DETAILED DESCRIPTION OF THE EMBODIMENTS

The following clearly and completely describes the technical solutions according to the embodiments of the present invention with reference to the accompanying drawings in the embodiments of the present invention. Obviously, the embodiments in the following description are part of rather than all of the embodiments of the present invention. All other embodiments obtained by persons of ordinary skill in the art based on the embodiments in the present invention without making creative efforts shall fall within the protection scope of the present invention.

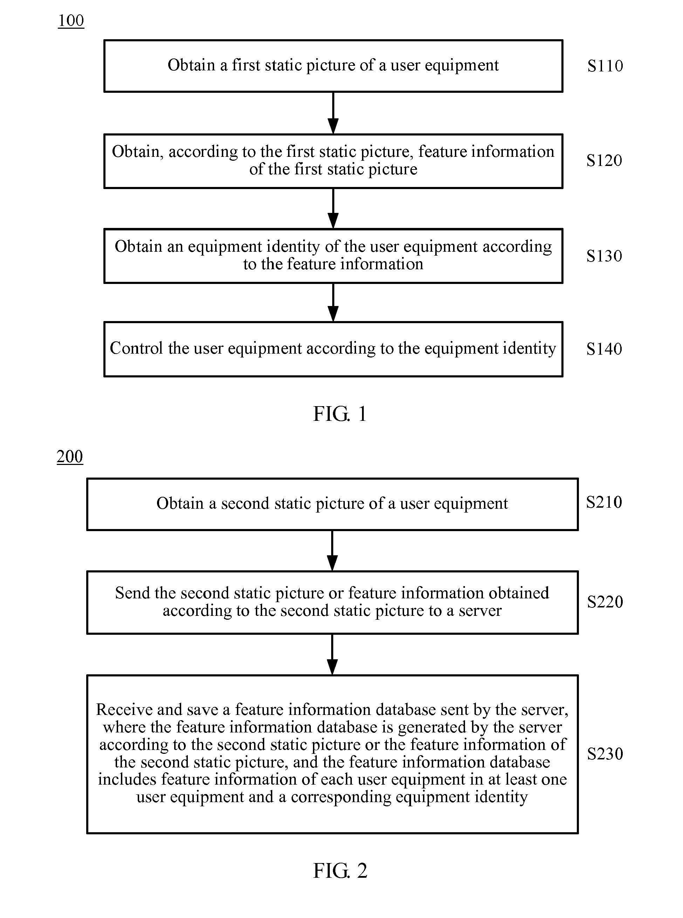

FIG. 1 shows a schematic flowchart of a method 100 for controlling a user equipment according to an embodiment of the present invention. As shown in FIG. 1, the method 100 includes:
S 110: Obtain a first static picture of a user equipment.
S120: Obtain, according to the first static picture, feature information of the first static picture.
S130: Obtain an equipment identity of the user equipment according to the feature information.
S 140: Control the user equipment according to the equipment identity.

To control a user equipment, a control device may obtain the first static picture of the user equipment by using an image capturing tool such as a camera and so on, and the control device may obtain, according to the first static picture, the feature information of the first static picture, and accordingly obtain an equipment identity of the user equipment, where the equipment identity corresponds to the feature information of the first static picture, so that the control device may control the user equipment according to the equipment identity.

Therefore, according to the method in the embodiment of the present invention, the static picture of the user equipment is obtained, and the equipment identity of the user equipment is obtained according to the static picture, so that the user equipment can be controlled according to the equipment identity, so that a user can quickly, accurately and intuitively select, by using an image recognition technology, the user equipment to be controlled without making multiple attempts to select the user equipment, thereby improving user experience.

It should be understood that, the user equipment, the control device and a server in the embodiment of the present invention may be a DMR, a DMC and a DMS, respectively, in home network devices, that is, the control device may serve as a UPnP control point, and the user equipment and the server may serve as UPnP devices, and specifically, the user equipment may be a digital television, a digital refrigerator and so on. However, this is merely an example of the embodiment of the present invention, and is not intended to limit the embodiment of the present invention in any way.

The embodiment of the present invention is illustrated with an example that the control device controls the user equipment to realize sharing of a media file only. It should be understood that, according to the embodiment of the present invention, the user equipment may be controlled to implement other functions, for example, a digital refrigerator is controlled for refrigeration, refrigeration temperature of the digital refrigerator is adjusted, a digital television is controlled to play MTV, a digital baking oven is controlled for baking, and so on, and the embodiment of the present invention shall not be limited here.

In the embodiment of the present invention, the static picture includes a first static picture and a second static picture; the static picture refers to a picture of the user equipment in a non-working state or a turn-off state, for example, a picture of the digital television in a turn-off state or a standby state. Optionally, the static picture further includes a background. For example, in the static picture, a proportion of the background in the entire static picture is more than 1/4, that is, the proportion of the user equipment in the entire static picture is less than 3/4. In this case, even for completely identical user equipments, backgrounds are different because of different positions of the user equipments, so that static pictures of the user equipments are also different. Therefore, static pictures including backgrounds may better distinguish different user equipments.

In the embodiment of the present invention, the control device may obtain the static picture of the user equipment in various methods. Optionally, the control device may capture a picture of the user equipment in the non-working state, where the picture is the static picture of the user equipment, and the picture may also include a background. Optionally, the obtaining, by the control device, the static picture of the user equipment includes: obtaining, by the control device, a dynamic picture of the user equipment in a working state; and processing, by the control device, the dynamic picture to form the static picture of the user equipment, where the dynamic picture may also include a background. That is, in the embodiment of the present invention, the static picture may be a picture including a background of the user equipment in the non-working state, or a static picture generated by processing a dynamic picture, which includes a background, of the user equipment in the working state.

For example, the control device obtains one photo of the user equipment while the user equipment is playing a video, where the photo may include a background, and the control device may recognize a window portion of the user equipment by using an edge detection algorithm, for example, a gradient algorithm, and process a picture of the window portion, so as to form the static picture of the user equipment, for example, set all RGB values of the picture of the window portion to 0. The control device may also continuously obtain multiple photos of the user equipment while the user equipment is playing the video, for example, continuously obtain multiple photos through a burst shooting function of a mobile phone, and the control device recognizes the window portion of the user equipment by comparing different parts of the multiple photos, and processes the picture of the window portion, so as to form the static picture of the user equipment.

In the embodiment of the present invention, the feature information of the static picture usually may include: a grey scale, an angular point, brightness, a pixel value and so on. The control device may extract the feature information according to the static picture by using an algorithm such as a scale-invariant feature transform algorithm (Scale-Invariant Feature Transform, referred to as "SIFT"), a speeded up robust features algorithm (Speeded Up Robust Features, referred to as "SURF") and so on.

In the embodiment of the present invention, the equipment identity of the user equipment may include an IP address of the user equipment, and may also include any word, letter, numeral symbol and so on corresponding to the user equipment. In the control device, one or more pieces of feature information of one user equipment may all correspond to the equipment identity of the user equipment; therefore, the control device may obtain the equipment identity of the user equipment according to the feature information, so as to control the user equipment.

In the embodiment of the present invention, the control device may further search in an established feature information database for matching feature information that matches the feature information of the user equipment, so as to obtain the equipment identity of the user equipment, where the feature information database includes feature information of each user equipment in at least one user equipment and a corresponding equipment identity. The following describes a schematic flowchart of a method 200 for controlling a user equipment according to an embodiment of the present invention with reference to FIG. 2. As shown in FIG. 2, the method 200 includes:

In S210, a control device obtains a second static picture of a user equipment. The control device may directly obtain the second static picture of the user equipment in a non-working state, and may also obtain a dynamic picture of the user equipment in a working state, and process the dynamic picture to form the second static picture of the user equipment. Optionally, the second static picture includes a background.
In S220, the control device sends the second static picture or feature information obtained according to the second static picture to a server.
In S230, the control device receives and saves a feature information database sent by the server, where the feature information database is generated by the server according to the second static picture or the feature information of the second static picture, and the feature information database includes feature information of each user equipment in at least one user equipment and a corresponding equipment identity. If the server receives the second static picture, the server firstly obtains the feature information of the second static picture according to the second static picture. Based on the obtained feature information of the second static picture, the server may calculate, by modeling, feature information of the feature information in cases of position moving or angle change and so on, and perform integration to obtain the feature information database including the feature information of each user equipment and the corresponding equipment identity.

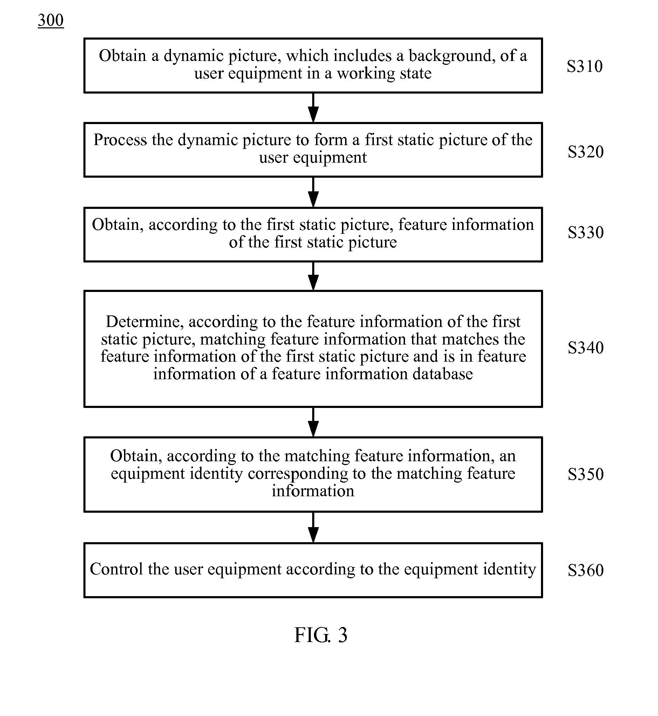

In the embodiment of the present invention, a static picture includes a first static picture and a second static picture; the static picture may be a picture including a background of the user equipment in the non-working state, or a static picture generated by processing a dynamic picture, which includes a background, of the user equipment in the working state.
The following specifically describes a method 300 for controlling a user equipment by obtaining an equipment identity of the user equipment through a feature information database with reference to FIG. 3. As shown in FIG. 3, the method 300 includes:
S310: A control device obtains a dynamic picture, which includes a background, of a user equipment in a working state.
S320: The control device processes the dynamic picture to form a first static picture of the user equipment.
S330: The control device obtains, according to the first static picture, feature information of the first static picture.
S340: The control device determines, according to the feature information of the first static picture, matching feature information that matches the feature information in feature information of a feature information database.
S350: The control device obtains, according to the matching feature information, an equipment identity corresponding to the matching feature information.
S360: The control device controls the user equipment according to the equipment identity.

It should be understood that, the control device may also directly obtain a first or a second static picture of the user equipment in a non-working state, and the first or the second static picture may not include the background, and may also include the background. It should be further understood that, the sequence numbers of the foregoing procedures do not imply an execution sequence, and the execution sequence of the procedures should be determined according to their functions and internal logic, which is not intended to limit an implementation procedure of the embodiment of the present invention in any way.

In S340, the control device may determine, according to that the feature information in the feature information database is completely the same as the feature information of the first static picture, the feature information as matching feature information that matches the feature information of the first static picture. Optionally, the determining, by the control device, the matching feature information that matches the feature information of the first static picture and is in the feature information of the feature information database may further include: determining, by the control device, a matching degree between the feature information of the first static picture and feature information in the feature information database; and when a maximum matching degree in the matching degree is greater than a first threshold, determining, by the control device, feature information corresponding to the maximum matching degree as the matching feature information.

In S350, according to the matching feature information, the control device may obtain, from the feature information database, the equipment identity corresponding to the matching feature information, and may also obtain, according to correspondence between feature information in the feature information database saved in the control device and a user equipment and an equipment identity, the equipment identity corresponding to the matching feature information.

Optionally, when the maximum matching degree is smaller than or equal to the first threshold and greater than or equal to a second threshold, the control device prompts a user to update the feature information of the user equipment in the feature information database, where the first threshold is greater than the second threshold. Optionally, when the maximum matching degree is smaller than the second threshold, the control device prompts the user to re-obtain the first static picture of the user equipment, or the control device prompts the user to newly add the feature information of the user equipment to the characteristic information database.

For example, the first threshold may be set to 80%, and the second threshold may be set to 50%. When the maximum matching degree is greater than 80%, the control device may determine the feature information which is in the feature information database and corresponds to the maximum matching degree as the matching feature information, and thereby obtaining the equipment identity corresponding to the matching feature information. When the maximum matching degree is smaller than or equal to 80% and greater than or equal to 50%, the control device may determine the feature information which is in the feature information database and corresponds to the maximum matching degree as the matching feature information, and prompt the user to update the feature information of the user equipment in the feature information database; the control device may also directly prompt the user to update the feature information database and reselect the user equipment to be controlled according to the updated feature information database. When the maximum matching degree is smaller than 50%, the control device may prompt the user to re-obtain the first static picture of the user equipment, or the control device prompts the user to newly add the feature information of the user equipment to the characteristic information database.

In the embodiment of the present invention, a static picture includes a first static picture and a second static picture; the static picture may be a picture including a background of the user equipment in the non-working state, or a static picture generated by processing a dynamic picture, which includes a background, of the user equipment in the working state.

According to the method in the embodiment of the present invention, the static picture of the user equipment is obtained, and the equipment identity of the user equipment is obtained according to the static picture, so that the user equipment can be controlled according to the equipment identity, and the user can quickly, accurately and intuitively select, by using an image recognition technology, the user equipment to be controlled without making multiple attempts to select the user equipment, thereby improving user experience.

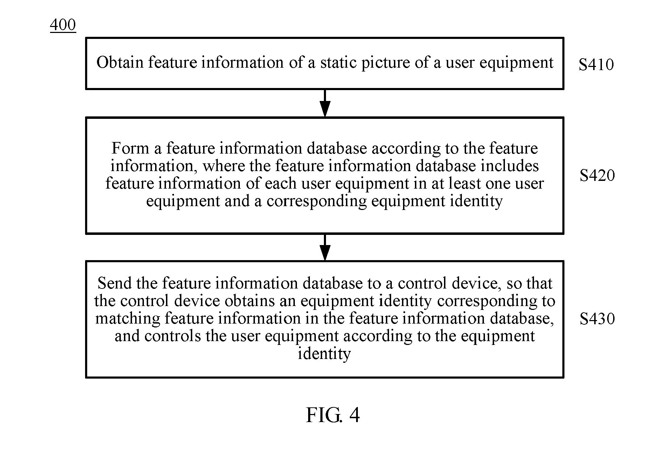

The foregoing describes the methods for controlling the user equipment according to the embodiments of the present invention in terms of the control device with reference to FIG. 1 to FIG. 3. The following describes a method 400 for controlling a user equipment according to an embodiment of the present invention in terms of a server with reference to FIG. 4. As shown in FIG. 4, the method 400 includes:
S410: Obtain feature information of a static picture of a user equipment.
S420: Form a feature information database according to the feature information, where the feature information database includes feature information of each user equipment in at least one user equipment and a corresponding equipment identity.
S430: Send the feature information database to a control device, so that the control device obtains an equipment identity corresponding to matching feature information in the feature information database, and controls the user equipment according to the equipment identity.

In the embodiment of the present invention, the obtaining, by the server, the feature information of the static picture of the user equipment may include: receiving, by the server, the feature information of the static picture of the user equipment, where the feature information is sent by the control device. Optionally, the obtaining, by the server, the feature information of the static picture of the user equipment further includes: receiving, by the server, the static picture of the user equipment, where the static picture is sent by the control device; and obtaining, by the server, the feature information of the static picture of the user equipment according to the static picture of the user equipment.

In the embodiment of the present invention, the static picture refers to a picture of the user equipment in a non-working state or a turn-off state, and optionally, the static picture includes a background. In the embodiment of the present invention, the feature information of the static picture usually may include: a grey scale, an angular point, brightness, pixel value and so on. The server may also extract, according to the static picture, the feature information of the static picture by using an algorithm such as a scale-invariant feature transform algorithm (Scale-Invariant Feature Transform, referred to as "SIFT"), a speeded up robust features algorithm (Speeded Up Robust Features, referred to as "SURF") and so on.

In the embodiment of the present invention, based on the obtained feature information, the server may calculate, by modeling, feature information of the feature information in cases of position moving or angle change and so on, and perform integration to obtain the feature information database including the feature information of each user equipment and the corresponding equipment identity. For example, each item of the feature information database may correspond to one user equipment, and may include multiple pieces of feature information of the user equipment, and may further include the equipment identity of the user equipment.

In the embodiment of the present invention, the equipment identity of the user equipment may include an IP address of the user equipment, and may also include any word, letter, numeral, symbol and so on corresponding to the user equipment. Correspondence between an equipment identity of a user equipment and feature information or an item in the feature information database may be saved in the feature information database by the server, and a corresponding correspondence table may also be re-established by the server or the control device. That is, the control device may obtain, from the feature information database, the equipment identity corresponding to the matching feature information, and may also obtain, according to the correspondence between feature information in the feature information database saved in the control device and a user equipment and an equipment identity, the equipment identity corresponding to the matching feature information.

According to the method in the embodiment of the present invention, the static picture of the user equipment is obtained, and the equipment identity of the user equipment is obtained according to the static picture, so that the user equipment can be controlled according to the equipment identity, and a user can quickly, accurately and intuitively select, by using an image recognition technology, the user equipment to be controlled without making multiple attempts to select the user equipment, thereby improving user experience.

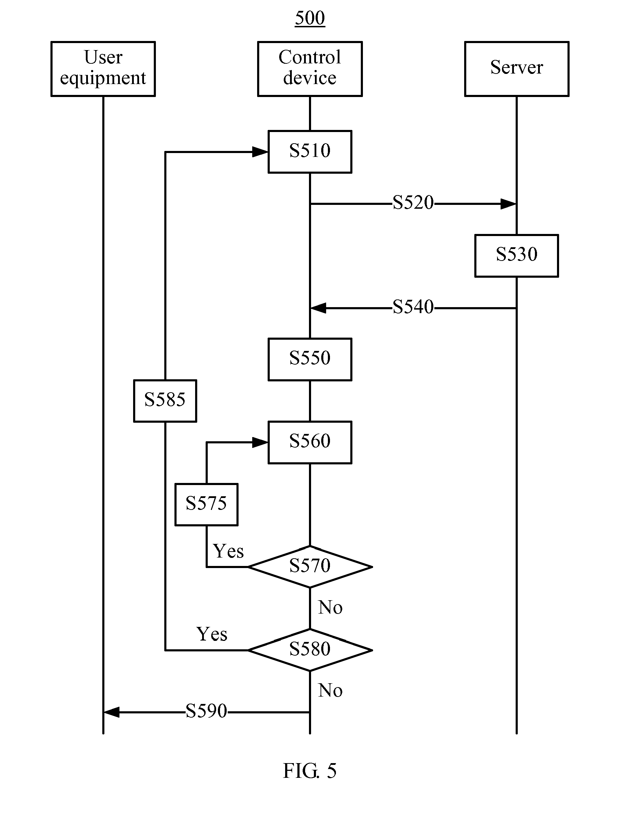

The following describes a specific embodiment of a method 500 for controlling a user equipment according to an embodiment of the present invention with reference to FIG. 5. As shown in FIG. 5, the method 500 includes:
S510: A control device obtains a second static picture of a user equipment.
S520: The control device sends the second static picture or feature information obtained according to the second static picture to a server.
S530: The server forms a feature information database according to the second static picture or the feature information of the second static picture, where the feature information database includes feature information of each user equipment in at least one user equipment and a corresponding equipment identity.
S540: The server sends the feature information database to the control device.
S550: The control device receives and saves the feature information database sent by the server.
S560: When a user needs to control a determined user equipment, the control device obtains a first static picture of the user equipment, and obtains, according to the first static picture, feature information of the first static picture, and the control device may further calculate a matching degree between the feature information of the first static picture and feature information in the feature information database.
S570: Determine whether a maximum matching degree in the matching degree is smaller than a second threshold, and if the maximum matching degree is smaller than the second threshold, the process proceeds to S575; otherwise, the process proceeds to S580.
5575: The control device prompts the user to re-obtain the first static picture of the user equipment, or prompts the user to newly add the feature information of the user equipment to the characteristic information database, and the process returns to 5560 at this time.
S580: Determine whether the maximum matching degree is smaller than or equal to a first threshold, where the first threshold is greater than the second threshold, and if the maximum matching degree is smaller than or equal to the first threshold, the process proceeds to S585; otherwise, the process proceeds to S590.
S585: The control device prompts the user to update the feature information of the user equipment in the feature information database, and the process returns to S510: and
S590: The control device determines feature information which is in the feature information database and corresponds to the maximum matching degree as matching feature information, and obtains, according to the matching feature information, an equipment identity corresponding to the matching feature information, so as to control the user equipment according to the equipment identity.

In the embodiment of the present invention, a static picture includes a first static picture and a second static picture; the static picture may be a picture including a background of the user equipment in a non-working state, or a static picture generated by processing a dynamic picture, which includes a background, of the user equipment in a working state.

It should be understood that, the sequence numbers of the foregoing procedures do not imply an execution sequence, and the execution sequence of the procedures should be determined according to their functions and internal logic, which is not intended to limit an implementation procedure of the embodiment of the present invention in any way.

According to the method in the embodiment of the present invention, a static picture of the user equipment is obtained, and the equipment identity of the user equipment is obtained according to the static picture, so that the user equipment can be controlled according to the equipment identity, and the user can quickly, accurately and intuitively select, by using an image recognition technology the user equipment to be controlled without making multiple attempts to select the user equipment, thereby improving user experience.

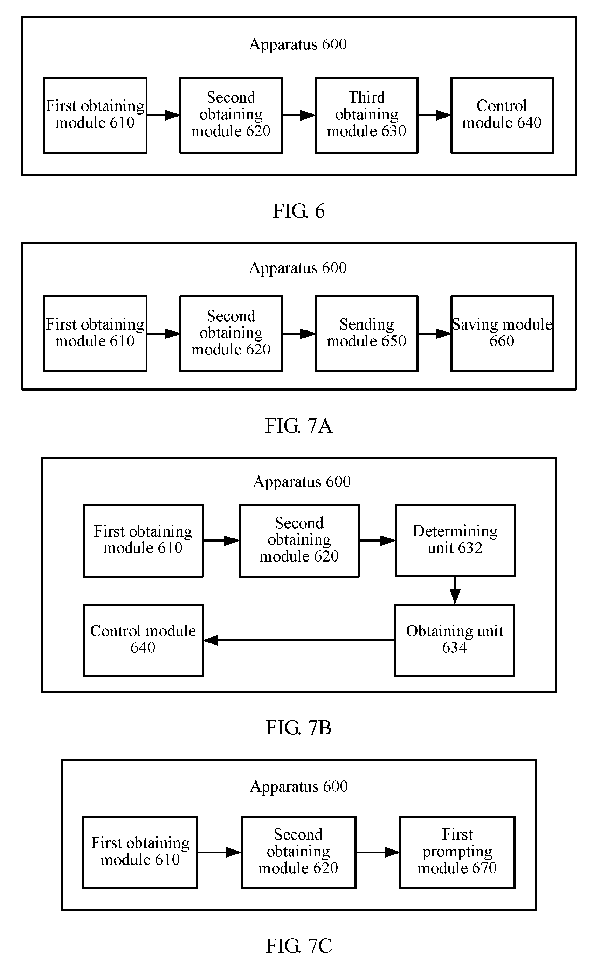

The following describes apparatuses for controlling a user equipment according to embodiments of the present invention in detail with reference to FIG. 6 to FIG. 9B.

FIG. 6 shows a schematic block diagram of an apparatus 600 for controlling a user equipment according to an embodiment of the present invention. As shown in FIG. 6, the apparatus 600 includes:
a first obtaining module 610, configured to obtain a first static picture of the user equipment;
a second obtaining module 620, configured to obtain, according to the first static picture, feature information of the first static picture;
a third obtaining module 630, configured to obtain an equipment identity of the user equipment according to the feature information; and
a control module 640, configured to control the user equipment according to the equipment identity.

According to the apparatus in the embodiment of the present invention, a static picture of the user equipment is obtained, and the equipment identity of the user equipment is obtained according to the static picture, so that the user equipment can be controlled according to the equipment identity, and a user can quickly, accurately and intuitively select, by using an image recognition technology, the user equipment to be controlled without making multiple attempts to select the user equipment, thereby improving user experience.

In the embodiment of the present invention, the static picture refers to a picture of the user equipment in a non-working state or a turn-off state, and optionally, the static picture includes a background. In the embodiment of the present invention, the feature information of the static picture usually may include: a grey scale, an angular point, brightness, a pixel value and so on. The apparatus may extract, according to the static picture, the feature information of the static picture by using an algorithm such as a scale-invariant feature transform algorithm (Scale-Invariant Feature Transform, referred to as "SIFT"), a speeded up robust features algorithm (Speeded Up Robust Features, referred to as "SURF") and so on.

In the embodiment of the present invention, the equipment identity of the user equipment may include an IP address of the user equipment, and may also include any word, letter, numeral, symbol, and so on, corresponding to the user equipment. The apparatus may obtain, from a feature information database, the equipment identity corresponding to matching feature information, and may also obtain, according to correspondence between feature information in the feature information database saved in the apparatus and a user equipment and an equipment identity, the equipment identity corresponding to the matching feature information.

Optionally, as shown in FIG. 7A, the first obtaining module 610 is further configured to obtain a second static picture of the user equipment; the second obtaining module 620 is further configured to obtain feature information of the second static picture of the user equipment; and the apparatus 600 further includes:
a sending module 650, configured to send the second static picture of the user equipment or the feature information of the second static picture to a server; and
a saving module 660, configured to receive and save the feature information database sent by the server, where the feature information database is generated by the server according to the second static picture or the feature information of the second static picture, and the feature information database includes feature information of each user equipment in at least one user equipment and a corresponding equipment identity.

Optionally, as shown in FIG. 7B, the third obtaining module 630 includes:
a determining unit 632, configured to determine, according to the feature information of the first static picture, matching feature information that matches the feature information of the first static picture and is in the feature information of the feature information database; and
an obtaining unit 634, configured to obtain, according to the matching feature information, the equipment identity corresponding to the matching feature information.

Optionally, the determining unit 632 is specifically configured to:
determine a matching degree between the feature information of the first static picture and the feature information in the feature information database; and
when a maximum matching degree in the matching degree is greater than a first threshold, determine feature information which is in the feature information database and corresponds to the maximum matching degree as the matching feature information.

Optionally, as shown in FIG. 7C, the apparatus 600 further includes:
a first prompting module 670, configured to, when the maximum matching degree determined by the determining unit 632 is smaller than or equal to the first threshold and greater than or equal to a second threshold, prompt the user to update the feature information of the user equipment in the feature information database, where the first threshold is greater than the second threshold.

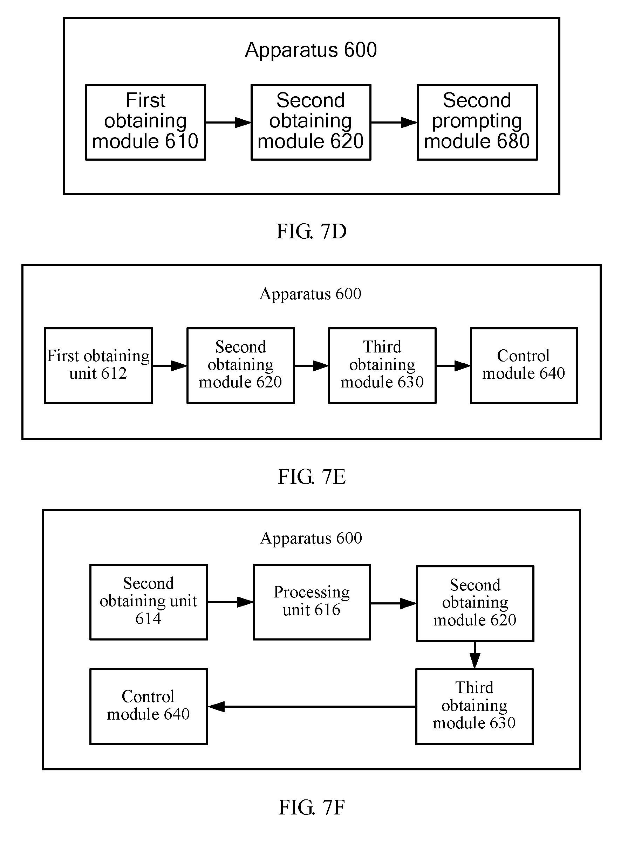

Optionally, as shown in FIG. 7D, the apparatus 600 further includes:
a second prompting module 680, configured to: when the maximum matching degree determined by the determining unit 632 is smaller than the second threshold, prompt the user to re-obtain the first static picture of the user equipment, or prompt the user to newly add the feature information of the user equipment to the characteristic information database.

Optionally, as shown in FIG. 7E, the first obtaining module 610 includes:
a first obtaining unit 612, configured to obtain the first static picture of the user equipment, and configured to obtain the second static picture of the user equipment, where the first static picture and the second static picture are pictures including backgrounds of the user equipment in the non-working state.

Optionally, as shown in FIG. 7F, the first obtaining module 610 further includes:
a second obtaining unit 614, configured to obtain a first dynamic picture, which includes a background, of the user equipment in a working state, and configured to obtain a second dynamic picture, which includes a background, of the user equipment in the working state; and
a processing unit 616, configured to process the first dynamic picture to generate the first static picture of the user equipment; and configured to process the second dynamic picture to generate the second static picture of the user equipment.

In the embodiment of the present invention, a static picture includes a first static picture and a second static picture; the static picture may be a picture including a background of the user equipment in the non-working state, or a static picture generated by processing a dynamic picture, which includes a background, of the user equipment in the working state.

The apparatus 600 for controlling the user equipment according to the embodiment of the present invention may correspond to the control device in the embodiments of the present invention, and the foregoing and other operations and/or functions of the modules in the apparatus 600 are each used for implementing the corresponding processes of the methods 100 to 300 and 500 in FIG. 1 to FIG. 3 and FIG. 5, which are not repeatedly described here for brevity.

According to the apparatus in the embodiment of the present invention, the static picture of the user equipment is obtained, and the equipment identity of the user equipment is obtained according to the static picture, so that the user equipment can be controlled according to the equipment identity, and the user can quickly, accurately and intuitively select, by using the image recognition technology, the user equipment to be controlled without making multiple attempts to select the user equipment, thereby improving the user experience.

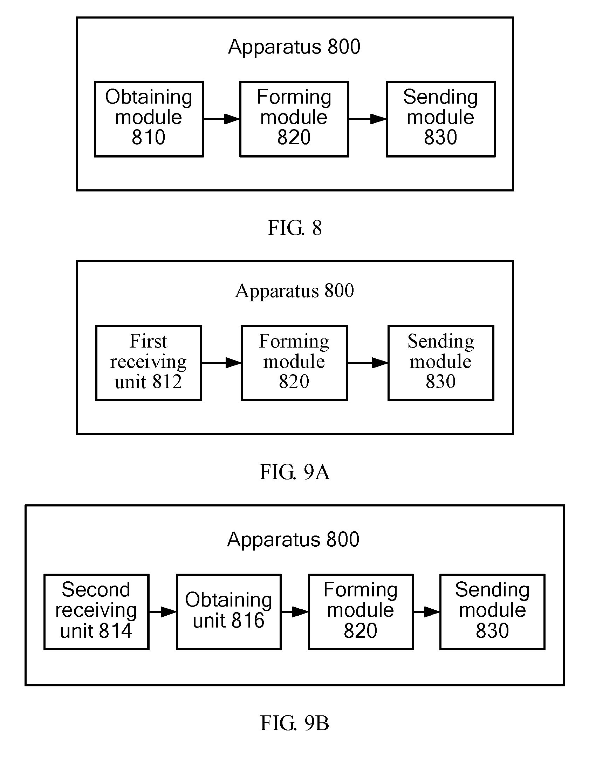

FIG. 8 shows a schematic block diagram of an apparatus 800 for controlling a user equipment according to another embodiment of the present invention. As shown in FIG. 8, the apparatus 800 includes:
an obtaining module 810, configured to obtain feature information of a static picture of the user equipment;
a forming module 820, configured to form a feature information database according to the feature information, where the feature information database includes feature information of each user equipment in at least one user equipment and a corresponding equipment identity; and
a sending module 830, configured to send the feature information database to a control device, so that the control device obtains an equipment identity corresponding to matching feature information in the feature information database, and controls the user equipment according to the equipment identity.

In the embodiment of the present invention, the static picture refers to a picture of the user equipment in a non-working state or a turn-off state, and optionally, the static picture includes a background. In the embodiment of the present invention, the feature information of the static picture usually may include: a grey scale, an angular point, brightness, a pixel value and so on. The apparatus may also extract, according to the static picture, the feature information of the static picture by using an algorithm such as a scale-invariant feature transform algorithm (Scale-Invariant Feature Transform, referred to as "SIFT"), a speeded up robust features algorithm (Speeded Up Robust Features, referred to as "SURF") and so on.

In the embodiment of the present invention, based on the obtained feature information, the apparatus may calculate, by modeling, feature information of the feature information in cases of position moving or angle change and so on, and perform integration to obtain the feature information database including the feature information of each user equipment and the corresponding equipment identity. For example, each item of the feature information database may correspond to one user equipment, and may include multiple pieces of feature information of the user equipment, and may further include the equipment identity of the user equipment. In the embodiment of the present invention, the equipment identity of the user equipment may include an IP address of the user equipment, and may also include any word, letter, numeral, symbol, and so on, corresponding to the user equipment.

Optionally, as shown in FIG. 9A, the obtaining module 810 includes:
a first receiving unit 812, configured to receive the feature information of the static picture of the user equipment, where the feature information is sent by the control device.

Optionally, as shown in FIG. 9B, the obtaining module 810 further includes:
a second receiving unit 814, configured to receive the static picture of the user equipment, where the static picture is sent by the control device; and
an obtaining unit 816, configured to obtain, according to the static picture of the user equipment, the feature information of the static picture of the user equipment.

The apparatus 800 for controlling the user equipment according to the embodiment of the present invention may correspond to the server in the embodiments of the present invention; and the foregoing and other operations and/or functions of the modules in the apparatus 800 are each used for implementing the corresponding processes of the methods 400 to 500 in FIG. 4 to FIG. 5, which are not repeatedly described here for brevity.

According to the apparatus in the embodiment of the present invention, the static picture of the user equipment is obtained, and the equipment identity of the user equipment is obtained according to the static picture, so that the user equipment can be controlled according to the equipment identity, and a user can quickly, accurately and intuitively select, by using an image recognition technology, the user equipment to be controlled without making multiple attempts to select the user equipment, thereby improving user experience.

Persons of ordinary skill in the art may be aware that, the exemplary units and algorithm steps described in combination with the embodiments disclosed here can be implemented by electronic hardware, computer software, or a combination of the two. To clearly illustrate interchangeability between the hardware and the software, the foregoing illustration has generally described composition and steps of the examples according to functions. Whether the functions are executed in a manner of hardware or software depends on a particular application and a design constraint condition of the technical solutions. Persons skilled in the art may use different methods to implement the described functions for every particular application, but it should not be considered that such implementation goes beyond the scope of the present invention.

Persons skilled in the art may clearly understand that, for convenience and brevity of description, reference may be made to the corresponding procedure in the foregoing method embodiments for a detailed working procedure of the foregoing system, apparatus and unit, which is not repeatedly described here.

In the several embodiments provided in the present application, it should be understood that the disclosed system, apparatus, and method may be implemented in other manners. For example, the foregoing described apparatus embodiments are merely exemplary. For example, division of the units is merely logical function division and there may be other division manners in practical implementation. For example, multiple units or components may be combined or integrated into another system, or some features may be ignored or not executed. In addition, the displayed or discussed mutual coupling or direct coupling or communication connection may be indirect coupling or communication connection through some interfaces, apparatuses or units, and may also be electrical, mechanical, or connection in other forms.

The units described as separate parts may or may not be physically separate, and parts displayed as units may or may not be physical units, may be located in one position, or may be distributed on multiple network units. Part of or all of the units here may be selected according to a practical need to achieve the objectives of the solutions of the embodiments of the present invention.

In addition, functional units in the embodiments of the present invention may be integrated into a processing unit, or each unit may exist alone physically, or two or more than two units may be integrated into one unit. The integrated unit may be implemented in a form of hardware, or may be implemented in a form of a software functional unit.

If being implemented in the form of a software functional unit and sold or used as a separate product, the integrated unit may be stored in a computer-readable storage medium. Based on such understanding, the nature of the technical solutions of the present invention, or the part contributing to the prior art, or all of or part of the technical solutions may be implemented in a form of software product. The computer software product is stored in a storage medium and includes several instructions for instructing a computer device (which may be a personal computer, a server, or a network device, and the like) to execute all of or part of the steps of the method described in the embodiments of the present invention. The storage medium includes: various media that may store program codes, such as a U-disk, a removable hard disk, a read-only memory (ROM, Read-Only Memory), a random access memory (RAM, Random Access Memory), a magnetic disk, a compact disk, and so on.

The foregoing description is only a specific implementation manner of the present invention. The protection scope of the present invention, however, is not limited here. Various modifications or replacements may be readily conceivable to any person skilled in the art within the technical scope disclosed in the present invention, and such modifications or replacements shall fall within the protection scope of the present invention. Therefore, the protection scope of the present invention shall be subject to the protection scope of the claims.

## Claims

1. A method for controlling a user equipment, comprising:
obtaining a first static picture of the user equipment;
obtaining, according to the first static picture, feature information of the first static picture;
obtaining an equipment identity of the user equipment according to the feature information; and
controlling the user equipment according to the equipment identity.

2. The method according to claim 1, wherein before the obtaining the first static picture of the user equipment, the method further comprises:
obtaining a second static picture of the user equipment;
sending the second static picture or feature information obtained according to the second static picture to a server; and
receiving and saving a feature information database sent by the server, wherein the feature information database is generated by the server according to the second static picture or the feature information of the second static picture, and the feature information database comprises feature information of each user equipment in at least one user equipment and a corresponding equipment identity.

3. The method according to claim 1 or 2, wherein the obtaining the equipment identity of the user equipment comprises:
determining, according to the feature information of the first static picture, matching feature information that matches the feature information of the first static picture and is in the feature information of the feature information database; and
obtaining, according to the matching feature information, the equipment identity corresponding to the matching feature information.

4. The method according to claim 3, wherein the determining the matching feature information that matches the feature information of the first static picture and is in the feature information of the feature information database comprises:
determining a matching degree between the feature information of the first static picture and the feature information in the feature information database; and
when a maximum matching degree in the matching degree is greater than a first threshold, determining feature information which is in the feature information database and corresponds to the maximum matching degree as the matching feature information.

5. The method according to claim 4, further comprising:
when the maximum matching degree is smaller than or equal to the first threshold and greater than or equal to a second threshold, prompting a user to update the feature information of the user equipment in the feature information database, wherein the first threshold is greater than the second threshold.

6. The method according to claim 4 or 5, further comprising:
when the maximum matching degree is smaller than the second threshold, prompting the user to re-obtain the first static picture of the user equipment, or prompting the user to newly add the feature information of the user equipment to the characteristic information database.

7. The method according to any one of claims 2 to 6, wherein the first static picture and the second static picture are specifically:
pictures comprising backgrounds of the user equipment in a non-working state, or
static pictures generated by processing dynamic pictures, which comprise backgrounds, of the user equipment in a working state.

8. A method for controlling a user equipment, comprising:
obtaining feature information of a static picture of the user equipment;
forming a feature information database according to the feature information, wherein the feature information database comprises feature information of each user equipment in at least one user equipment and a corresponding equipment identity; and
sending the feature information database to a control device, so that the control device obtains an equipment identity corresponding to matching feature information in the feature information database and controls the user equipment according to the equipment identity.

9. The method according to claim 8, wherein the obtaining the feature information of the static picture of the user equipment comprises:
receiving the feature information of the static picture of the user equipment, wherein the feature information is sent by the control device.

10. The method according to claim 8 or 9, wherein the obtaining the feature information of the static picture of the user equipment comprises:
receiving the static picture of the user equipment, wherein the static picture is sent by the control device; and
obtaining, according to the static picture of the user equipment, the feature information of the static picture of the user equipment.

11. An apparatus for controlling a user equipment, comprising:
a first obtaining module, configured to obtain a first static picture of the user equipment;
a second obtaining module, configured to obtain, according to the first static picture, feature information of the first static picture;
a third obtaining module, configured to obtain an equipment identity of the user equipment according to the feature information; and
a control module, configured to control the user equipment according to the equipment identity.

12. The apparatus according to claim 11, wherein the first obtaining module is further configured to obtain a second static picture of the user equipment; and the second obtaining module is further configured to obtain feature information of the second static picture of the user equipment; and
the apparatus further comprises:
a sending module, configured to send the second static picture of the user equipment or the feature information of the second static picture to a server; and
a saving module, configured to receive and save a feature information database sent by the server, wherein the feature information database is generated by the server according to the second static picture or the feature information of the second static picture, and the feature information database comprises feature information of each user equipment in at least one user equipment and a corresponding equipment identity.

13. The apparatus according to claim 11 or 12, wherein the third obtaining module comprises:
a determining unit, configured to determine, according to the feature information of the first static picture, matching feature information that matches the feature information of the first static picture and is in the feature information of the feature information database; and
an obtaining unit, configured to obtain, according to the matching feature information, the equipment identity corresponding to the matching feature information.

14. The apparatus according to claim 13, wherein the determining unit is specifically configured to:
determine a matching degree between the feature information of the first static picture and the feature information in the feature information database; and
when a maximum matching degree in the matching degree is greater than a first threshold, determine feature information which is in the feature information database and corresponds to the maximum matching degree as the matching feature information.

15. The apparatus according to claim 14, further comprising:
a first prompting module, configured to, when the maximum matching degree determined by the determining unit is smaller than or equal to the first threshold and greater than or equal to a second threshold, prompt a user to update the feature information of the user equipment in the feature information database, wherein the first threshold is greater than the second threshold.

16. The apparatus according to claim 14 or 15, further comprising:
a second prompting module, configured to, when the maximum matching degree determined by the determining unit is smaller than the second threshold, prompt the user to re-obtain the first static picture of the user equipment, or prompt the user to newly add the feature information of the user equipment to the characteristic information database.

17. The apparatus according to any one of claims 12 to 16, wherein the first obtaining module comprises:
a first obtaining unit, configured to obtain the first static picture of the user equipment, and configured to obtain the second static picture of the user equipment, wherein the first static picture and the second static picture are pictures comprising backgrounds of the user equipment in a non-working state.

18. The apparatus according to any one of claims 12 to 17, wherein the first obtaining module further comprises:
a second obtaining unit, configured to obtain a first dynamic picture, which comprises a background, of the user equipment in a working state, and configured to obtain a second dynamic picture, which comprises a background, of the user equipment in the working state; and
a processing unit, configured to process the first dynamic picture to generate the first static picture of the user equipment, and configured to process the second dynamic picture to generate the second static picture of the user equipment.

19. An apparatus for controlling a user equipment, comprising:
an obtaining module, configured to obtain feature information of a static picture of the user equipment;
a forming module, configured to form a feature information database according to the feature information, wherein the feature information database comprises feature information of each user equipment in at least one user equipment and a corresponding equipment identity; and
a sending module, configured to send the feature information database to a control device, so that the control device obtains an equipment identity corresponding to matching feature information in the feature information database and controls the user equipment according to the equipment identity.

20. The apparatus according to claim 19, wherein the obtaining module comprises:
a first receiving unit, configured to receive the feature information of the static picture of the user equipment, wherein the feature information is sent by the control device.

21. The apparatus according to claim 19 or 20, wherein the obtaining module further comprises:
a second receiving unit, configured to receive the static picture of the user equipment, wherein the static picture is sent by the control device; and
an obtaining unit, configured to obtain, according to the static picture of the user equipment, the feature information of the static picture of the user equipment.
